# EUROPÄISCHE PATENTSCHRIFT

(11) **EP 1 249 594 B1**
(45) Veröffentlichungstag und Bekanntmachung des Hinweises auf die Patenterteilung: **12.12.2007**
(21) Anmeldenummer: 01125704.5
(22) Anmeldetag: 27.10.2001
(51) Int. Cl.: F02F 7/00

(54) **Vorrichtung zur Anordnung zweier einen Einbauraum umschliessenden Gehäuseteile einer Brennkraftmaschine**
Device for assembling two housing parts enclosing a construction space in an internal combustion engine
Dispositif pour le montage de deux parties d'un bâtiment formant un espace de construction dans un moteur à combustion interne

(30) Priorität: 10.04.2001 DE 10117829
(43) Veröffentlichungstag der Anmeldung: 16.10.2002
(73) Patentinhaber: Bayerische Motoren Werke Aktiengesellschaft, 80809 München (DE)
(72) Erfinder: Dovids, Christian, 85221 Dachau (DE)

(56) Entgegenhaltungen:
- DE-U- 29 715 716
- GB-A- 1 218 734
- US-A- 5 884 594
- PATENT ABSTRACTS OF JAPAN vol. 012, no. 311 (M-734), 24. August 1988 (1988-08-24) & JP 63 083464 A (YAMAHA MOTOR CO LTD), 14. April 1988 (1988-04-14)
- PATENT ABSTRACTS OF JAPAN vol. 016, no. 416 (M-1304), 2. September 1992 (1992-09-02) & JP 04 140576 A (SUZUKI MOTOR CORP), 14. Mai 1992 (1992-05-14)

## Beschreibung

Die Erfindung bezieht sich auf eine Vorrichtung zur Anordnung zweier einen Einbauraum umschließenden Gehäuseteile einer Brennkraftmaschine, wobei ein dünnwandiges, abdeckendes Gehäuseteil über eine von einer gummielastischen Dichtung querab angeordnete Verschraubung mit dem anderen Gehäuseteil in lösbarer Verbindung steht.

Aus der DE 33 29 418 C2 ist eine Abdichtung einer Zylinderkopfhaube am Zylinderkopf einer Brennkraftmaschine bekannt, bei der das abdeckende Gehäuseteil mit dem anderen Gehäuseteil über eine die Dichtung durchsetzende Verschraubung in lösbarer Verbindung steht. Diese Anordnung ist bauaufwendig.

Weiter ist aus der DE 43 24 462 A1 eine Vorrichtung zur Anordnung zweier einen Einbauraum umschließenden Gehäuseteile einer Brennkraftmaschine bekannt, bei der ein dünnwandiges, abdeckendes Gehäuseteil über eine zur gummielastischen Dichtung versetzt angeordnete Verschraubung mit dem anderen Gehäuseteil in lösbarer Verbindung steht. Je nach Dichtungsanordnung kann sich hierbei der wesentliche Nachteil ergeben, dass mit der Verschraubung das dünnwandige, abdeckende Gehäuseteil mit seinem mit der Dichtung verbundenen Abschnitt zum Ausbeulen neigt und somit die Dichtung in ihrer Wirkung in nachteiliger Weise unwirksam ist.

Schließlich ist aus der EP O 942 155 A1 eine abschnittsweise im Querschnitt gezeigte Brennkraftmaschine bekannt mit einer am Kurbelgehäuse befestigten Ölwanne. In diese Ölwanne ist ein als ein Einsatz gestalteter Ölhobel eingesetzt, der über am Außenumfang seiner Längswände ausgebildete Rippen aufweist, über die der Ölhobel-Einsatz quer zur Brennkraftmaschine in der Ölwanne lagefixiert ist.

Der Erfindung liegt die Aufgabe zugrunde, für eine gattungsgemäße Vorrichtung ohne Änderung einer insbesondere akustisch entkoppelten Verschraubung eine Maßnahme aufzuzeigen, mit der ein die Wirkung einer Dichtung reduzierendes Ausbeulen/Verformen des abdeckenden Gehäuseteiles sicher vermieden ist.

Diese Aufgabe ist mit den Merkmalen gemäß dem Patentanspruch 1 gelöst. Das abdeckende Gehäuseteil ist relativ zum anderen Gehäuseteil über zumindest an einem der Gehäuseteile angeordnete Abstützelemente gegen mit der Verschraubung verbundene Ausbeul- bzw. Verformungsbewegungen quer zur elastischen Dichtung lagegesichert angeordnet,
und das abdeckende Gehäuseteil und das andere Gehäuseteil weisen jeweils einbauraumseitig angeordnete, korrespondierende Abstützelemente auf, die zur Trennebene der beiden Gehäuseteile gleichsinnig schräg angeordnet sind in einem im wesentlichen parallelen gegenseitigen Abstand entsprechend der Dicke eines an der Dichtung einbauraumseitig gerichtet vorgesehenen elastischen Fortsatzes.

Die vorbeschriebene Ausgestaltung ist vorteilhaft weitergebildet dadurch, dass das abdeckende Gehäuseteil eine aus Kunststoff gefertigte Zylinderkopfhaube ist und das andere Gehäuseteil ein Zylinderkopf, wobei die Abstützelemente in Richtung Einbauraum des Zylinderkopfes gleichsinnig schräg nach unten weisend angeordnet sind, und dass die Abstützelemente jeweils über Rippen an Zylinderkopfhaube und Zylinderkopf biegestarr angeordnet sind.

Mit der Erfindung ist in vorteilhafter Weise ein Beulen/Verformen der Zylinderkopfhaube sicher vermieden bei geringem zusätzlichen Materialaufwand für im wesentlichen rechtwinkelig oder schräg zur jeweiligen Trennebene der beiden Gehäuseteile angeordnete Abstützelemente. In weiterer vorteilhafter Weise unterstützt die Anordnung der Abstützelemente gleichsinnig schräg nach unten in den Zylinderkopf hinein die Montage der Zylinderkopfhaube zusätzlich.

Eine weitere vorteilhafte Weiterbildung kennzeichnet sich auch dadurch, dass der Zylinderkopf mit einer benachbart einer Seitenlängswand in querab gerichteten Lagerböcken gelagerten und mittels über Stehbolzen fixierter Lagerdeckel gesicherten Nockenwelle ausgerüstet ist und die der Seitenlängswand eng benachbarten Stehbolzen einer akustisch entkoppelten Verschraubung der Zylinderkopfhaube mit dem Zylinderkopf dienen, wobei die Abstützelemente als korrespondierende Abschnitte zwischen den Nockenwellen-Lagerungen ausgebildet sind und über lappenartige Fortsätze an einer an der Zylinderkopfhaube angeordneten Dichtung ebenfalls akustisch entkoppelt in Verbindung stehen.

Mit dieser Weiterbildung ist bei minimalem Materialaufwand für Zylinderkopfhaube und Zylinderkopf eine bestmögliche Aussteifung der Zylinderkopfhaube erzielt und zugleich eine insgesamt akustische Entkoppelung der Zylinderkopfhaube sichergestellt.

Die Erfindung ist anhand von in der Zeichnung dargestellten Ausführungsbeispielen beschrieben. Es zeigt
- Figur 1: Gehäuseteile mit gleichsinnig schräg angeordneten Abstützelementen,
- Figur 2: ein Gehäuseteil mit zur Trennebene rechtwinkeligen Abstützelementen, nicht gemäß der Erfindung.

Eine Vorrichtung 1 zur Anordnung zweier einen Einbauraum 2 umschließenden Gehäuseteile 3, 4 einer nicht näher dargestellten Brennkraftmaschine umfasst ein dünnwandiges, abdeckendes Gehäuseteil 3, das über eine von einer gummielastischen Dichtung 5 querab angeordnete Verschraubung 6 mit dem anderen Gehäuseteil 4 in lösbarer Verbindung steht.

Um ein Ausbeulen bzw. eine Verformung des abdeckenden bzw. haubenseitigen Gehäuseteiles 3 durch die querab zur Dichtung 5 versetzt angeordnete Verschraubung 6 zu vermeiden, weisen das haubenseitige Gehäuseteil 3 und das andere Gehäuseteil 4 jeweils einbauraumseitig angeordnete, korrespondieren Abstützelemente 7, 8 auf, die zur Trennebene 9 der beiden Gehäuseteile 3, 4 gleichsinnig schräg angeordnet sind in einem im wesentlichen parallelen Abstand entsprechend der Dicke eines an der Dichtung 5 einbauraumseitig gerichtet vorgesehenen elastischen Fortsatzes 10.

Die erfindungsgemäße Vorrichtung 1 findet bevorzugt Anwendung für ein abdeckendes Gehäuseteil 3 als eine aus Kunststoff gefertigte Zylinderkopfhaube 3', wobei das andere Gehäuseteil 4 ein Zylinderkopf 4' ist und wobei die Abstützelemente 7 und 8 in Richtung Einbauraum 2 des Zylinderkopfes 4' gleichsinnig schräg nach unten weisend angeordnet sind. Ferner sind die Abstützelemente 7 und 8 jeweils über Rippen 11, 12 an Zylinderkopfhaube 3' und Zylinderkopf 4' biegestarr angeordnet.

Wie aus der einzigen Figur ersichtlich, ist der Zylinderkopf 4' mit einer benachbart einer Seitenlängswand 13 in querab gerichteten Lagerböcken 14 gelagerten und mittels über Stehbolzen 15, 16 fixierter Lagerdeckel 17 gesicherten Nockenwelle 18 ausgerüstet. Hierbei dienen die der Seitenlängswand 13 eng benachbarten Stehbolzen 16 einer nicht näher dargestellten, akustisch entkoppelten Verschraubung 6 der Zylinderkopfhaube 3' mit dem Zylinderkopf 4'. Die an Zylinderkopfhaube 3' und Zylinderkopf 4' angeordneten Abstützelemente 7 und 8 sind durch die mit der Seitenwand 13 direkt verbundenen Lagerböcke 14 als korrespondierende Abschnitte zwischen Nockenwellen-Lagerungen 19 ausgebildet. Die Dichtung 5 weist dementsprechend ausgebildete lappenartige Fortsätze 10 zwischen den Abstützelementen 7 und 8 auf, womit die aufgrund der zur Dichtung 5 querab versetzten Verschraubung 6 bzw. des querab versetzten Stehbolzens 16 verschraubte Zylinderkopfhaube 3' gegen Ausbeulen in Richtung des Einbauraumes 2 gehinderte Zylinderkopfhaube 3' gegenüber dem Zylinderkopf 4' akustisch entkoppelt ist.

Die gummielastische Dichtung 5 mit den lappenartigen Fortsätzen 10 ist zur Erleichterung der Montage der Zylinderkopfhaube 3' am Zylinderkopf 4' an der Zylinderkopfhaube 3' unverlierbar angeordnet.

Mit der erfindungsgemäßen Vorrichtung 1 wird in vorteilhafter Weise erreicht, dass ein Auswandern des mit der Dichtung 5 verbundenen Randes 20 der Zylinderkopfhaube 3' gegenüber dem Zylinderkopf 4' einwandfrei vermieden ist und somit die volle Funktion der Dichtung 5 erhalten bleibt.

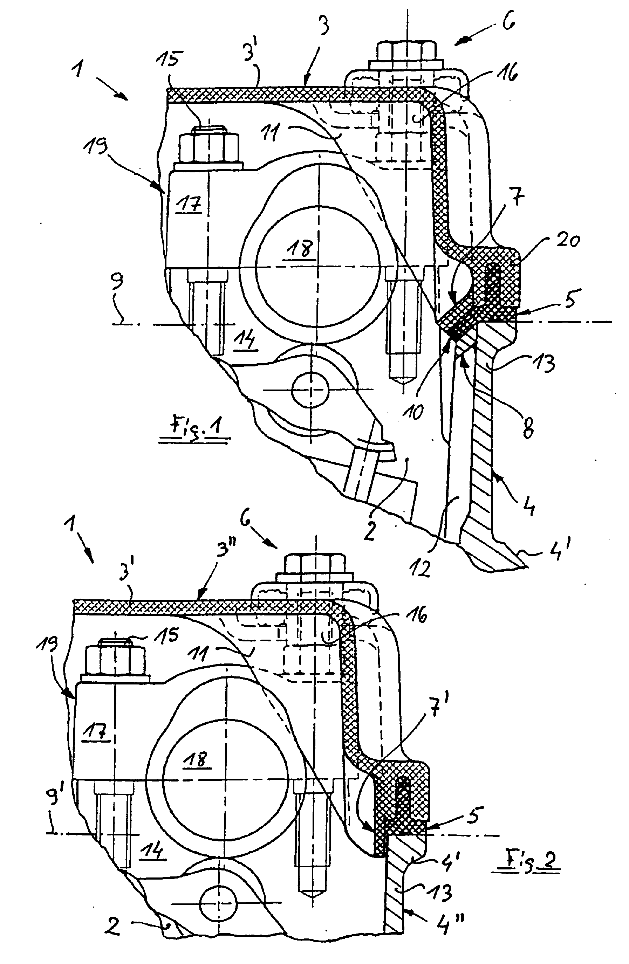

In Figur 2 sind gleiche Teile mit gleichen Bezugsziffern belegt. Bei diesem Beispiel sind am abdeckenden Gehäuseteil 3" zur lagegesicherten Anordnung relativ zum anderen Gehäuseteil 4" einbauraumseitig quer zur Trennebene 9' der Gehäuseteile 3", 4" angeordnete Abstützelemente 7' vorgesehen. Diese Anordnung wird nicht von der Erfindung umfasst.

## Patentansprüche

1. Anordnung zweier einen Einbauraum umschließender Gehäuseteile einer Brennkraftmaschine, wobei ein dünnwandiges, abdeckendes Gehäuseteil (3) über eine von einer gummielastischen Dichtung (5) querab angeordnete Verschraubung (6) mit dem anderen Gehäuseteil (4) in lösbarer Verbindung steht, wobei das abdeckende Gehäuseteil (3) relativ zum anderen Gehäuseteil (4) über zumindest ein an einem der Gehäuseteile (3, 4) angeordnetes Abstützelement (7) gegen mit der Verschraubung (6) verbundene Ausbeul- bzw. Verformungsbewegungen quer zur elastischen Dichtung (5) lagegesichert angeordnet ist,
**dadurch gekennzeichnet, dass** das abdeckende Gehäuseteil (3) und das andere Gehäuseteil (4) jeweils einbauraumseitig angeordnete, korrespondierende Abstützelemente (7, 8) aufweisen, die zur Trennebene (9) der beiden Gehäuseteile (3, 4) gleichsinnig schräg angeordnet sind in einem im wesentlichen parallelen gegenseitigen Abstand entsprechend der Dicke eines an der Dichtung (5) einbauraumseitig gerichtet vorgesehenen elastischen Fortsatzes (10).

2. Anordnung nach Anspruch 1, **dadurch gekennzeichnet, dass** das abdeckende Gehäuseteil (3) eine aus Kunststoff gefertigte Zylinderkopfhaube (3') ist und das andere Gehäuseteil (4) ein Zylinderkopf (4'), wobei die Abstützelemente (7, 8) in Richtung Einbauraum (2) des Zylinderkopfes (4') gleichsinnig schräg nach unten weisend angeordnet sind, und dass die Abstützelemente (7, 8) ferner jeweils über Rippen (11, 12) an Zylinderkopfhaube (3') und Zylinderkopf (4') biegestarr angeordnet sind.

3. Anordnung nach einem der Ansprüche 1 oder 2, **dadurch gekennzeichnet, dass** der Zylinderkopf (4') mit einer benachbart einer Seitenlängswand (13) in querab gerichteten Lagerböcken (14) gelagerten und mittels über Stehbolzen (15, 16) fixierter Lagerdeckel (17) gesicherten Nockenwelle (18) ausgerüstet ist, und die der Seitenlängswand (13) eng benachbarten Stehbolzen (16) einer akustisch entkoppelten Verschraubung (6) der Zylinderkopfhaube (3') mit dem Zylinderkopf (4') dienen, wobei die Abstützelemente (7, 8) als korrespondierende Abschnitte zwischen Nockenwellen-Lagerungen (19) ausgebildet sind und über lappenartige Fortsätze (10) an einer an der Zylinderkopfhaube (3') angeordneten Dichtung (5) ebenfalls akustisch entkoppelt in Verbindung stehen.

## Claims

1. An arrangement of two parts of an internal combustion engine casing enclosing an insertion space, wherein a thin-walled covering casing part (3) is releasably connected to the other casing part (4) by screws (6) disposed alongside an elastomeric seal (5), wherein the covering casing part (3) is secured in position relative to the other casing part (4) by at least one bracing element disposed on one of the casing parts (3, 4) against bulging or deformation due to the screws (6) transversely of the elastic seal (5),
**characterised in that** the covering casing part (3) and the other part (4) each have corresponding bracing elements (7, 8) disposed on the insertion-space side at equal angles to the parting plane (9) of the two casing parts (3,4), substantially parallel to one another and separated by a spacing equal to the thickness of an elastic prolongation (10) on the seal (5) and directed towards the insertion space.

2. An arrangement according to claim 1,
**characterised in that** the covering casing part (3) is a plastics material cylinder-head hood (3') and the other casing part (4) is a cylinder head (4'), wherein the bracing elements (7, 8) are disposed pointing downwards at the same angle towards the insertion space (2) in the cylinder head (4') and the bracing elements (7, 8) are also prevented from bending by ribs (11, 12) on the cylinder-head hood (3') and the cylinder head (4').

3. An arrangement according to claim 1 or claim 2,
**characterised in that** cylinder head (4') is equipped with a camshaft (18) mounted in side-by-side bearing blocks (14) and secured by a bearing cover (17) fixed by stay bolts (15, 16) and the stay bolts (16) closely adjoining the longitudinal side wall (13) are used for acoustically decoupled screwing (6) of the cylinder-head hood (3') to the cylinder head (4'), wherein the bracing elements (7, 8) are in the form of corresponding portions between the camshaft bearings (19) and are connected, likewise acoustically decoupled, by fin-like prolongations (10) to a seal (5) disposed on the cylinder-head hood (3').

## Revendications

1. Montage de deux parties de carter entourant une chambre d'un moteur à combustion interne, selon lequel une partie de carter 3 de couverture, à paroi mince est reliée par une liaison amovible, par l'intermédiaire d'un joint 5 élastique comme du caoutchouc, avec un vissage transversal 6 à l'autre partie de carter 4, et la partie de carter de couverture est bloquée en position par rapport à l'autre partie de carter par au moins un élément d'appui prévu sur l'une des parties de carter 3, 4, contre les mouvements de déformation ou de gonflement liés au vissage 6, transversalement au joint élastique 5,
**caractérisé en ce que**
la partie de carter de couverture 3 et l'autre partie de carter 4 ont chacune des éléments d'appui 7, 8 qui se correspondent, installés du côté de la chambre, inclinés dans le même sens par rapport au plan de jonction 9 des deux parties de carter 3, 4, à une distance l'une de l'autre essentiellement parallèle correspondant à l'épaisseur d'un prolongement élastique 10 dirigé du côté de la chambre, et appartenant au joint 5.

2. Montage selon la revendication 1,
**caractérisé en ce que**
la partie de carter de couverture 3 est un capot 3' et l'autre partie de carter est la culasse 4', les éléments d'appui 7, 8 étant inclinés vers le bas dans le même sens en direction de la chambre 2 de la culasse 4' ; et les éléments d'appui 7, 8 sont reliés chaque fois par des nervures 11, 12 au capot 3' et à la culasse 4'.

3. Montage selon l'une des revendications 1 ou 2,
**caractérisé en ce que**
la culasse 4'comporte un arbre à came 18 fixé au voisinage d'une paroi latérale longitudinale 13 dans des blocs paliers 14 dirigés transversalement en étant fixés par des chapeaux de palier 17 bloqués par des goujons droits 15, 16, et les goujons droits 16 très proches de la paroi latérale longitudinale 13 servent au vissage 6 avec découplage acoustique du capot 3' sur la culasse 4',
les éléments d'appui 7, 8 étant réalisés sous la forme de segments correspondants entre les paliers d'arbre à came 19 et sont reliés par des prolongements en forme de patte 10 également avec découplage acoustique à un joint 5 prévu sur le capot 3'.
